# DEMANDE DE BREVET EUROPEEN

(11) **EP 4 530 187 A1**
(43) Date de publication de la demande: **02.04.2025**
(21) Numéro de dépôt: 24202453.7
(22) Date de dépôt: 25.09.2024
(51) Int. Cl.: B64D 11/06, B60N 2/14, B60N 2/015, B60N 2/06, B60N 2/34, B60N 2/64, B60N 2/90

(54) **STRUCTURE DE SIÈGE D'AÉRONEF AVEC UNE EMBASE EFFILÉE, ET CABINE D'AÉRONEF ASSOCIÉE**

(30) Priorité: 26.09.2023 FR 2310189
(71) Demandeur: Dassault Aviation, 75008 Paris (FR)
(72) Inventeur: BILLON, Jean-Rémi, 92552 SAINT-CLOUD CEDEX (FR); HAUTEM, Matthieu, 92552 SAINT-CLOUD CEDEX (FR); FOOS, Quentin, 92552 SAINT-CLOUD CEDEX (FR); NICOT, Maxime, 92552 SAINT-CLOUD CEDEX (FR)
(74) Mandataire: Lavoix

(57) **Abrégé**

La structure de siège (14) comprend :
- un bâti (42) ;
- une tourelle (46) disposée au-dessus du bâti (42), la tourelle (46) étant montée rotative par rapport au bâti (42) autour d'un axe vertical (A-A') entre une configuration nominale de repos dans laquelle la structure (14) est orientée suivant une direction principale (P) et au moins une configuration pivotée autour de l'axe vertical (A-A') par rapport à la configuration nominale;
- un chariot de déplacement principal (48), déplaçable suivant la direction principale (P) par rapport au bâti (42),
- un support d'assise (50).

Le chariot de déplacement principal (48) est porté par la tourelle (46), en étant monté mobile en translation par rapport à la tourelle (46) suivant la direction principale (P) dans la configuration nominale, le chariot de déplacement principal (48) portant le support d'assise (50).

## Description

La présente invention concerne une structure de siège d'aéronef, comprenant :
- un bâti, destiné à être fixé sur un plancher d'une cabine de l'aéronef ;
- une tourelle disposée au-dessus du bâti, la tourelle étant montée rotative par rapport au bâti autour d'un axe vertical entre une configuration nominale de repos dans laquelle la structure de siège est orientée suivant une direction principale et au moins une configuration pivotée autour de l'axe vertical par rapport à la configuration nominale;
- un chariot de déplacement principal, déplaçable suivant la direction principale par rapport au bâti,
- un support d'assise.

Un siège d'aéronef muni d'une telle structure est destiné à être placé dans une cabine d'aéronef, en particulier une cabine d'un avion d'affaires, pour fournir une assise confortable à un passager de l'aéronef.

La sécurité et le confort des passagers sont des éléments essentiels dans l'aviation d'affaires. A cet égard, il est connu de fournir aux passagers de tels avions un siège qui présente une structure robuste, notamment lors des phases de taxiage, de décollage et d'atterrissage (« Taxi, Takeoff and Landing » ou TTOL).

Le siège d'aéronef est également propre à s'incliner substantiellement, en particulier jusqu'à une position dite « Zéro G », dans laquelle le passager assis dans le siège peut se reposer, voire dormir, en ayant un appui très confortable et bien réparti le long du corps.

En plus d'être inclinable, le siège est généralement propre à être pivoté autour d'un axe vertical, afin de permettre au passager de pouvoir travailler ou discuter avec d'autres passagers en s'orientant dans une direction adéquate.

Les structures de siège, qui permettent de garantir la robustesse du siège, tout en assurant ces mouvements variés, sont généralement très complexes.

On connait une structure du type précité comprenant un bâti fixé sur le sol, et un chariot de déplacement longitudinal le long du bâti. Un autre chariot intermédiaire de déplacement transverse est monté entre le chariot de déplacement longitudinal et une tourelle sur laquelle est monté le support d'assise.

Une telle structure de siège permet de réaliser les mouvements précités. Elle est cependant très encombrante, notamment à sa base, ce qui donne au siège un aspect massif.

Un but de l'invention est d'obtenir une structure de siège d'aéronef, qui permette de réaliser des déplacements au moins en translation longitudinale et en rotation, ainsi qu'une inclinaison du siège vers une position de repos du passager, tout en ayant un aspect esthétique satisfaisant.

À cet effet, l'invention a pour un objet une structure de siège du type précité, caractérisé en ce que le chariot de déplacement principal est porté par la tourelle, en étant monté mobile en translation par rapport à la tourelle suivant la direction principale dans la configuration nominale, le chariot de déplacement principal portant le support d'assise.

La structure de siège selon l'invention peut comprendre l'une ou plusieurs des caractéristiques suivantes, prise(s) isolément ou suivant toute combinaison techniquement possible :
- le chariot de déplacement principal s'étend au moins en partie au-dessus de la tourelle ;
- le chariot de déplacement principal est monté mobile en translation dans la tourelle ;
- l'un du chariot de déplacement principal et de la tourelle comprend au moins une tige de guidage, l'autre du chariot de déplacement principal et de la tourelle délimitant un passage principal de réception de la tige de guidage s'étendant suivant la direction principale, la au moins une tige de guidage étant montée mobile en translation dans le passage principal ;
- l'un du chariot de déplacement principal et de la tourelle comprend deux tiges de guidage parallèles, l'autre du chariot de déplacement principal et de la tourelle comportant pour chaque tige de guidage, un passage principal de réception d'une tige de guidage respective ;
- la largeur de la tourelle, prise perpendiculairement la direction principale dans la configuration nominale, est inférieure à la largeur du chariot de déplacement principal, prise perpendiculairement la direction principale dans la configuration nominale ;
- la structure de siège comprend un chariot de déplacement transverse, monté mobile suivant une direction transverse perpendiculaire à la direction principale dans la configuration nominale, la tourelle étant montée rotative au-dessus du chariot de déplacement transverse ;
- la tourelle est montée rotative dans le chariot de déplacement transverse ;
- l'un du bâti et du chariot de déplacement transverse comprend au moins une barre transverse, l'autre du bâti et du chariot de déplacement transverse comprenant un passage transverse de guidage de la barre transverse dans laquelle la barre transverse est reçue mobile en translation dans le passage transverse le long de la direction transverse ;
- l'un du bâti et du chariot de déplacement transverse comprend deux barres transverses parallèles, l'autre du bâti et du chariot de déplacement transverse comprenant, pour chaque barre transverse, un passage transverse de guidage de la barre transverse dans laquelle la barre transverse est reçue mobile en translation le long de la direction transverse ;
- le bâti comprend des patins montés parallèlement l'un à l'autre suivant la direction principale dans la configuration nominale et destinés à être fixés dans le plancher de la cabine, la ou chaque barre transverse s'étendant entre les patins ;
- la largeur du chariot de déplacement transverse, prise suivant la direction transverse est inférieure à la largeur de la tourelle, prise suivant la direction transverse ;
- la structure de siège comprend un capot couvrant le bâti, la tourelle, et le chariot de déplacement principal, le capot présentant une forme convergente de haut en bas ;
- le support d'assise est articulé sur le chariot de déplacement principal, la structure de siège comprenant un support de dossier articulé sur le support d'assise.

L'invention a également pour objet une cabine d'aéronef, comprenant un plancher, et un siège d'aéronef, comprenant une structure de siège telle que définie plus haut, montée sur le plancher.

L'invention sera mieux comprise, à la lecture de la description qui va suivre, donnée uniquement à titre d'exemple, et faite en se référant aux dessins annexés, sur lesquels :
- [Fig.1] La figure 1 est une vue en perspective de trois-quarts face d'un siège d'aéronef monté dans une cabine d'aéronef, le siège étant muni d'une structure de siège selon l'invention, occupant une position redressée ;
- [Fig.2] La figure 2 est une vue partielle en perspective de la structure du siège de la figure 1 ;
- [Fig.3] La figure 3 est une vue de face de la structure du siège de la figure 1 ;
- [Fig.4] La figure 4 est une vue de côté de la structure du siège de la figure 1 ;
- [Fig.5] La figure 5 est un schéma représentant la cinématique de la structure de siège dans la position redressée ;
- [Fig.6] La figure 6 est une vue analogue à la figure 1, dans une position inclinée ;
- [Fig.7] La figure 7 est une vue analogue à la figure 2, dans la position inclinée ;
- [Fig.8] La figure 8 est une vue analogue à la figure 3, dans la position inclinée ;
- [Fig.9] La figure 9 est une vue analogue à la figure 4, dans la position inclinée ;
- [Fig.10] La figure 10 est une vue analogue à la figure 5, dans la position inclinée.

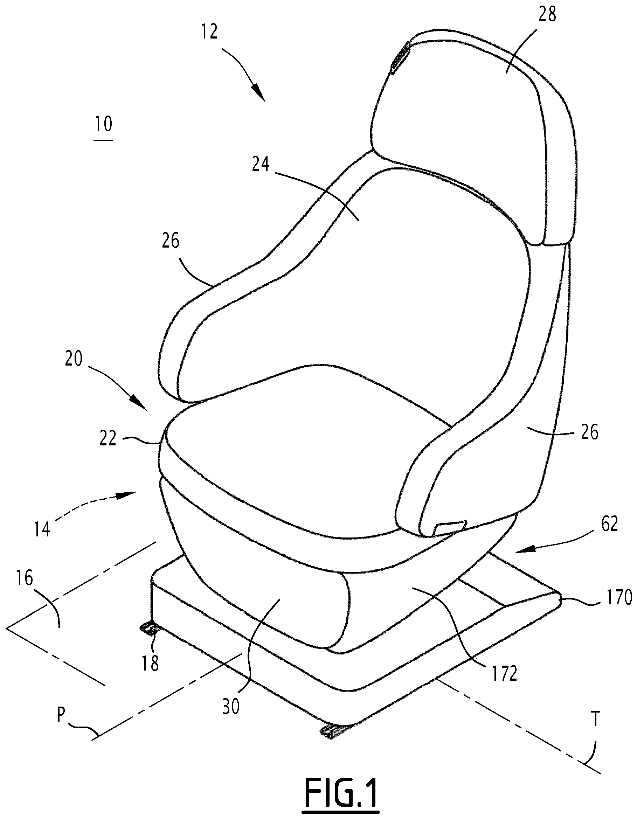

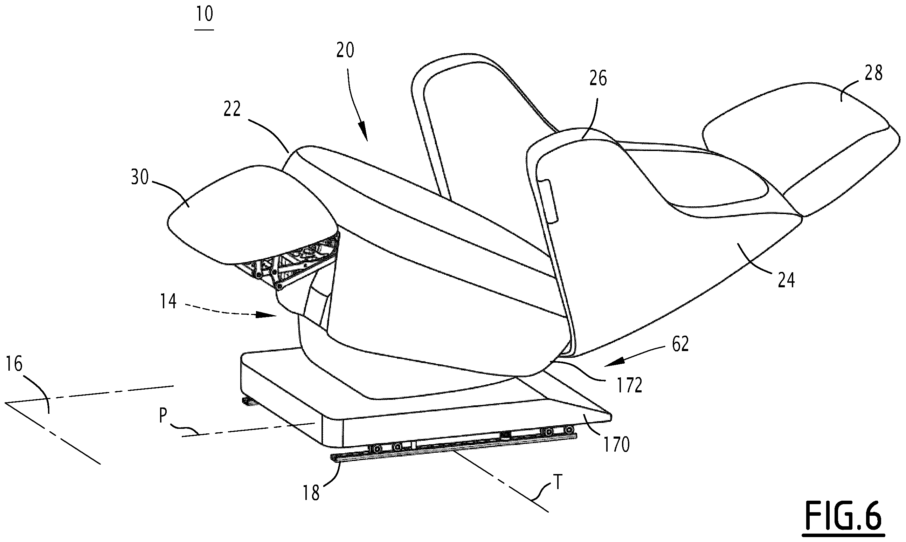

Une cabine d'aéronef 10 comportant un siège 12 muni d'une structure de siège 14 selon l'invention est illustrée par les figures 1 et 6. La cabine 10 comporte un plancher 16 muni de rails 18 sur lequel le siège 12 est monté.

Le siège 12 s'étend suivant une direction principale P, qui correspond généralement, dans une configuration nominale, en l'absence de rotation du siège 12, à une direction parallèle à l'axe longitudinal de l'aéronef. Ainsi, dans la configuration nominale, un passager assis dans le siège 12 et qui garde sa tête droite, sans la pivoter, regarde dans la direction principale.

Comme visible sur les figures 1 et 6, le siège 12 et sa structure 14 sont manoeuvrables entre une position redressée, visible sur la figure 1, notamment utilisée lors du taxiage, du décollage et de l'atterrissage de l'aéronef, et une position inclinée, notamment une position d'inclinaison maximale dite « Zéro G » dans laquelle le siège 12 est incliné.

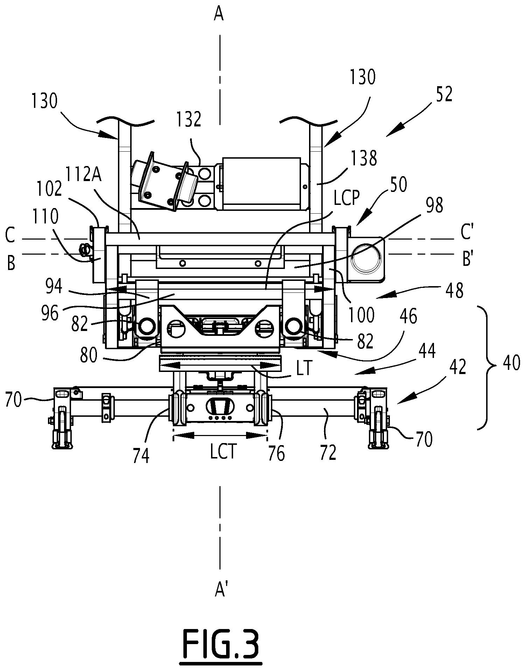

Le siège 12 est en outre manoeuvrable autour d'un axe vertical A-A' (visible sur la figure 3) pour être pivoté entre la configuration nominale et au moins une configuration pivotée par rapport à la configuration nominale. De préférence, la configuration nominale correspond à une orientation centrale sans rotation du siège 12 autour de l'axe A-A', le siège 12 pouvant être pivoté de part et d'autre de la configuration nominale dans des configurations pivotées.

En référence aux figures 1 et 6, le siège 12 comporte une garniture 20 qui comprend une assise 22, par exemple formée d'un coussin, un dossier 24, comportant par exemple des bras latéraux 26 de support, et un appui-tête 28.

Le siège 12 comprend optionnellement un repose-pied 30, déployable à partir d'un bord avant de l'assise 22.

Comme on le verra plus bas, la structure de siège 14 porte les éléments de la garniture 20, en particulier l'assise 22, le dossier 24, les bras 26, l'appui-tête 28, et le repose-pied 30, en permettant des mouvements relatifs entre les éléments de la garniture 20, pour passer de la position redressée à la position inclinée et vice-versa.

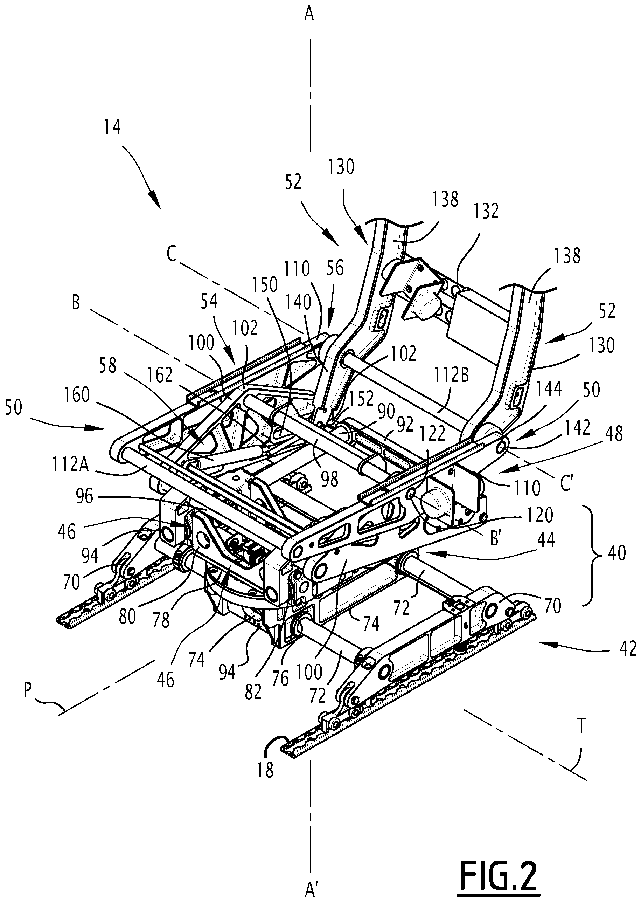

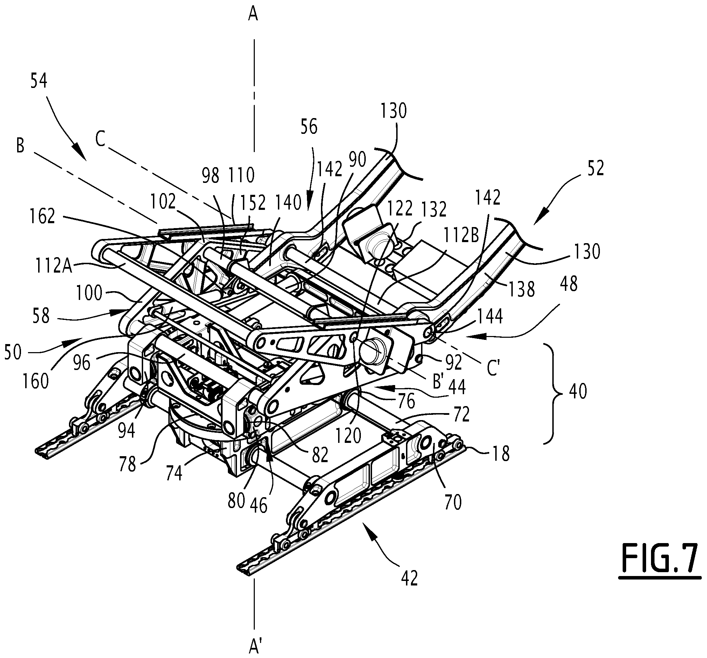

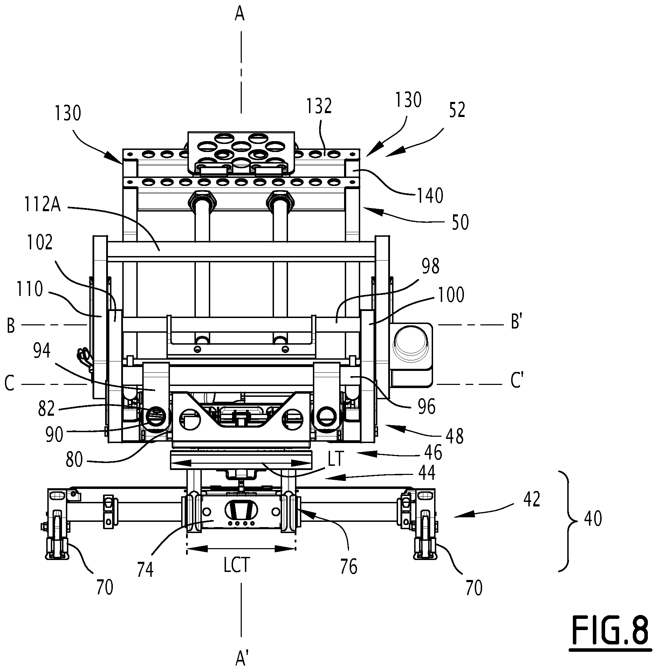

En référence aux figures 2 à 5, et 7 à 10, la structure de siège 14 comporte une embase 40, destinée à être montée sur le plancher 16, en particulier sur les rails 18, l'embase 40 comportant un bâti 42, un chariot de déplacement transverse 44, monté mobile sur le bâti 42 suivant une direction transverse T à la direction principale P et une tourelle 46, montée rotative sur le chariot de déplacement transverse 44, autour de l'axe vertical A-A' de pivotement.

La structure de siège 14 comporte en outre un chariot de déplacement principal 48 monté mobile sur la tourelle 46 suivant la direction principale P, un support d'assise 50, porté par le chariot de déplacement principal 48, et un support de dossier 52 articulé par rapport au support d'assise 50 et par rapport au chariot de déplacement principal 48.

La structure de siège 14 comporte en outre un système 54 d'articulation du support d'assise 50 sur le chariot de déplacement principal 48 et un système 56 d'articulation du support de dossier 52 sur le support d'assise 50 et sur le chariot de déplacement principal 48.

La structure de siège 14 comporte également un actionneur 58 de déplacement du support de dossier 52 et du support de siège 50 pour déplacer la structure de siège 14 entre la position redressée et la position inclinée.

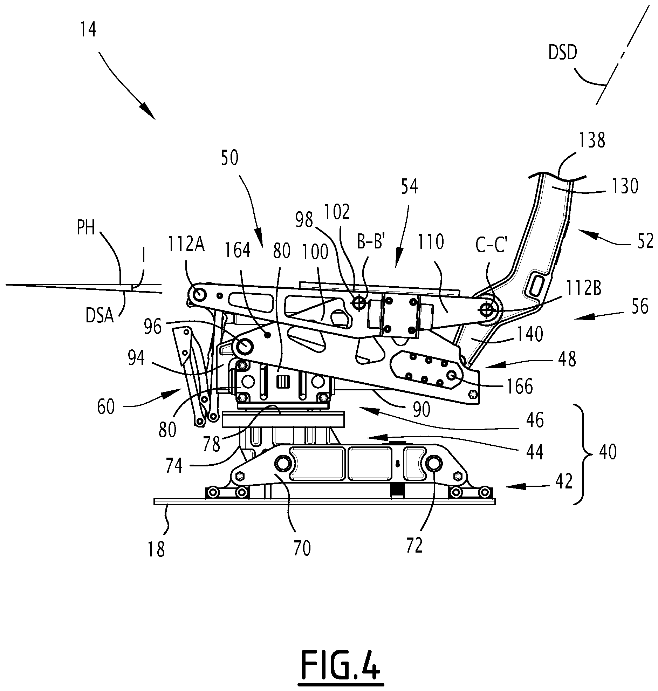

La structure de siège 14 comporte en outre un support de repose-pied 60 (visible sur la figure 4), et un ensemble de masquage 62 (visible sur la figure 1), destiné à la masquer depuis l'extérieur sous le garnissage 20.

Le bâti 42 assure la fixation de la structure de siège 14 sur le plancher 16, en particulier via les rails 18.

Il comporte deux patins parallèles 70 s'étendant suivant la direction principale P et au moins une barre transverse 72, de préférence deux barres transverses 72 raccordant entre eux les patins parallèles 70.

Chaque patin 70 présente ici une forme de trapèze ayant une petite base définie par son bord supérieur, et une grande base définie par son bord inférieur.

Le bord inférieur de chaque patin 70 est muni d'un mécanisme d'attache démontable sur un rail 18 pour fixer la structure de siège 14 sur le plancher 16 à une position déterminée réglable le long du rail 18.

Les barres transverses 72 s'étendent perpendiculairement aux patins 70.

Le chariot de déplacement transverse 44 est monté mobile en translation sur le bâti 42 suivant la direction transverse T. Il comporte un corps de base 74, définissant pour chaque barre transverse 72, un passage 76 de réception de la barre transverse 72.

Le passage de réception 76 débouche de part et d'autre du corps 64 parallèlement à la direction transverse T sur les faces latérales du corps 74. Dans cet exemple, il présente une section interne de forme complémentaire à la section externe de chaque barre transverse 72. Ainsi, le corps 74 est monté de manière exclusivement coulissante sur les barres 72.

Le corps 74 délimite en outre un orifice vertical 78 débouchant vers le haut pour la réception de la tourelle 46.

La tourelle 46 est montée rotative dans l'orifice vertical 78 du corps 74 du bâti 42. Elle est ainsi montée pivotante de part et d'autre de la configuration nominale par rapport au chariot de déplacement transverse 44 autour d'un axe vertical A-A' défini par l'orifice vertical 78.

La tourelle 46 comporte ainsi un pied (non visible) inséré dans l'orifice vertical 78 et un support 80 faisant saillie hors du chariot de déplacement transverse 44, au-dessus du chariot de déplacement transverse 44.

Le support 80 définit, le long de ses faces latérales, deux passages principaux 82 de guidage en translation du chariot de déplacement principal 48 suivant la direction principale P. Les passages principaux 82 s'étendent horizontalement, et débouchent ici de part et d'autre du support 80.

Dans la configuration nominale, en l'absence de rotation de la tourelle 46 autour de l'axe vertical A-A', les passages principaux 82 s'étendent suivant la direction principale P.

La largeur LT de la tourelle, prise suivant la direction transverse T est supérieure à la largeur LCT du chariot de déplacement transverse 44, prise suivant la direction transverse T.

Le chariot de déplacement principal 48 est monté mobile en translation dans la tourelle 46.

Dans la configuration nominale, en l'absence de rotation autour de l'axe vertical A-A', le chariot de déplacement principal 48 est déplaçable en translation le long de la direction principale P entre une configuration avant et une configuration arrière.

Comme visible sur les figures 2 et 3, le chariot de déplacement principal 48 comporte une partie inférieure montée dans la tourelle 46, et une partie supérieure de support du support d'assise 50 et du support de dossier 52.

La partie inférieure comporte un cadre de guidage comportant au moins une tige de guidage 90, de préférence deux tiges de guidage 90 parallèles, chaque tige de guidage 90 étant montée coulissante parallèlement à la direction principale P dans un passage principal 82.

Le cadre de guidage comporte en outre un tirant arrière 92 transverse, raccordant les extrémités arrières des tiges de guidage 90, et, pour chaque tige de guidage 90, une jambe avant 94 de liaison avec la partie supérieure du chariot de déplacement principal 48, faisant saillie vers le haut à partir de l'extrémité avant de la tige de guidage 90.

La partie supérieure est montée fixement sur la partie inférieure. Elle comporte dans cet exemple, une traverse inférieure 96, et une traverse supérieure 98. Elle comporte en outre deux flasques latéraux 100 raccordant les traverses 96, 98, et pour chaque flasque 100, un doigt horizontal de liaison 102 avec la partie inférieure (visible sur la figure 2).

La traverse inférieure 96 et la traverse supérieure 98 s'étendent parallèlement à la direction transverse T.

La traverse inférieure 96 raccorde les extrémités des jambes verticales 94, au-dessus du corps 74 de la tourelle 46. Elle s'étend latéralement au-delà des bords de la tourelle 86 de part et d'autre de la tourelle 46.

La traverse supérieure 98 s'étend au-dessus de la traverse inférieure 96. Elle s'étend également à l'arrière de la traverse inférieure 96, entre la traverse inférieure 96, et l'extrémité arrière des flasques 100.

Les flasques 100 s'étendent suivant la direction principale P, parallèlement à celle-ci, à l'écart l'un de l'autre.

Dans cet exemple, chaque flasque 100 présente une forme triangulaire, avec un sommet 102 situé entre l'extrémité avant et l'extrémité arrière du flasque 100. Dans cet exemple, le sommet 102 s'étend sensiblement au milieu du flasque 100 entre les extrémités du flasque 100, prises le long de la direction principale P.

La traverse supérieure 98 raccorde les sommets 102 des flasques 100. Les extrémités de la traverse supérieure 98 font saillie au-delà des flasques 100, vers l'extérieur de la structure de support 14.

Les doigts 102 raccordent les extrémités arrière des flasques 100 au tirant 92. Ils s'étendent horizontalement et transversalement.

La traverse inférieure 96 raccorde les extrémités avant des flasques 100.

Dans cet exemple, les flasques 100 sont partiellement ajourés.

La largeur LCP du chariot de déplacement principal, prise suivant la direction transverse T, est supérieure ou égale à la largeur LT de la tourelle 46, prise suivant la même direction.

Le support d'assise 50 comporte un cadre comprenant des poutres longitudinales 110 et des traverses 112A, 112B raccordant les poutres longitudinales 110 à leurs extrémités avant et arrière.

Chaque poutre principale 110 s'étend le long d'un côté respectif du chariot de déplacement principal 48, adjacent à un flasque 100.

La longueur de chaque poutre principale 110 est supérieure à la longueur du flasque 100 adjacent. Ainsi, la traverse 112A raccordant les extrémités avant du flasque 100 s'étend à l'avant de la traverse inférieure 96, et la traverse 1128 raccordant les extrémités arrière des poutres principales 110 s'étend de préférence à l'arrière du tirant 92 du chariot de déplacement principal 48.

L'assise 22 est montée sur le support d'assise 50.

Comme on va le décrire plus bas, le support d'assise 50 est ainsi articulé sur le chariot de déplacement principal 48, autour d'un axe avant d'articulation B-B'.

L'axe avant d'articulation B-B' s'étend parallèlement à la direction transverse T.

En projection dans un plan vertical médian de la structure de siège 14, l'axe avant d'articulation B-B' est situé entre le bord avant et le bord arrière du chariot de déplacement principal 48.

L'axe avant d'articulation B-B' s'étend le long de la traverse supérieure 98, au niveau des sommets 102 des flasques 100.

Le système d'articulation 54 du support d'assise 50 comporte ici, pour chaque poutre principale 110, un pivot 120 d'articulation solidaire du chariot de déplacement principal 48, et un orifice 122 de réception et de guidage du pivot 120, ménagé dans la poutre principale 110.

Dans cet exemple, chaque pivot 120 est formé par une extrémité en saillie respective de la traverse supérieure 98, qui fait saillie suivant la direction transverse T au-delà du flasque latéral 100. L'orifice 122 est ménagé dans une partie médiane de la poutre principale 110 suivant la direction transverse T.

Le support de dossier 52 comprend deux montants 130 parallèles faisant saillie vers le haut et vers l'arrière par rapport aux poutres principales 110 du support d'assise 50.

Le support de dossier 52 comporte en outre au moins une plaque arrière 132 ou/et une membrure transverse (non représentée) raccordant les montants 130 entre eux pour les maintenir parallèles l'un à l'autre.

Chaque montant 130 est monté rotatif par rapport au support d'assise 50 autour d'un axe arrière d'articulation C-C' parallèle à l'axe avant d'articulation B-B'.

L'axe arrière d'articulation C-C' divise le montant 130 en une partie supérieure 138, située au-dessus de l'axe arrière d'articulation C-C' et en un bras inférieur 140 situé en-dessous et à l'avant de l'axe arrière d'articulation C-C'.

La longueur du bras 140 est inférieure à la longueur de la partie supérieure 138 du montant 130, par exemple inférieure à au moins deux fois la longueur de la partie supérieure 138.

Chaque montant 130 s'étend entre les flasques 100, adjacent à un flasque 100 à l'opposé d'une poutre principale 110.

Le dossier 24 ainsi que l'appui-tête 28 sont montés sur le support de dossier 52.

Le système d'articulation 56 du support de dossier 52 comporte dans cet exemple un pivot formé par la traverse arrière 112B du support d'assise 50, qui traverse chaque montant 130 et par un orifice 144 de guidage du pivot 142, ménagé dans le montant 130 entre le bras inférieur 140 et la partie supérieure 138.

Le système d'articulation 56 du support de dossier 52 comporte en outre un mécanisme de guidage du déplacement de chaque montant 130 par rapport au chariot de déplacement principal 48.

Le mécanisme de guidage comporte une coulisse 150, ménagée dans un flasque latéral 100 adjacent au montant 130, et un coulisseau 152 formé ici par un pion introduit de manière coulissante dans la coulisse 150.

Dans cet exemple, la coulisse 150 s'étend à l'arrière de l'axe avant d'articulation B-B', et à l'avant de l'axe arrière d'articulation C-C'. Elle s'étend ici linéairement, en étant inclinée par rapport à un plan horizontal d'un angle supérieur à 5° et compris par exemple entre 10° et 20°.

L'inclinaison de la coulisse 150 est dirigée vers le haut en se déplaçant de l'arrière vers l'avant.

Le coulisseau 152 est monté en saillie transverse vers l'extérieur à partir du bras inférieur 140 du montant 130. Il est reçu coulissant dans la coulisse 150 et suit le parcours linéaire de la coulisse 150.

L'actionneur 58 comporte ici un vérin comprenant un corps de vérin 160 et un organe 162 déployable par rapport au corps de vérin 160 entre une position déployée et une position rétractée.

Dans cet exemple, le corps de vérin 160 est articulé en un point avant d'articulation 164 sur un des flasques latéraux 100 autour d'un axe avant transverse.

Le point avant d'articulation 164 est situé à l'arrière de l'extrémité avant du flasque latéral 100, en-dessous de l'axe avant d'articulation B-B' et à l'avant de celui-ci. Il est situé à l'arrière du bord avant du support de siège défini par la traverse avant 112A.

L'organe déployable 162 est ici formé par une tige de vérin. Il est articulé sur le bras inférieur 140 autour d'un axe transverse arrière en un point arrière d'articulation 166 situé au niveau du coulisseau 152, ou au voisinage de celui-ci.

La rétraction de l'organe déployable 162 de sa position déployée à sa position rétractée déplace vers l'avant le coulisseau 152 dans la coulisse 150 et conjointement le bras inférieur 140 le long de la coulisse 150. Inversement, le déploiement de l'organe déployable 162 depuis sa position rétractée vers sa position déployée déplace vers l'arrière le coulisseau 152 dans la coulisse 150 et conjointement le bras inférieur 140 le long de la coulisse 150.

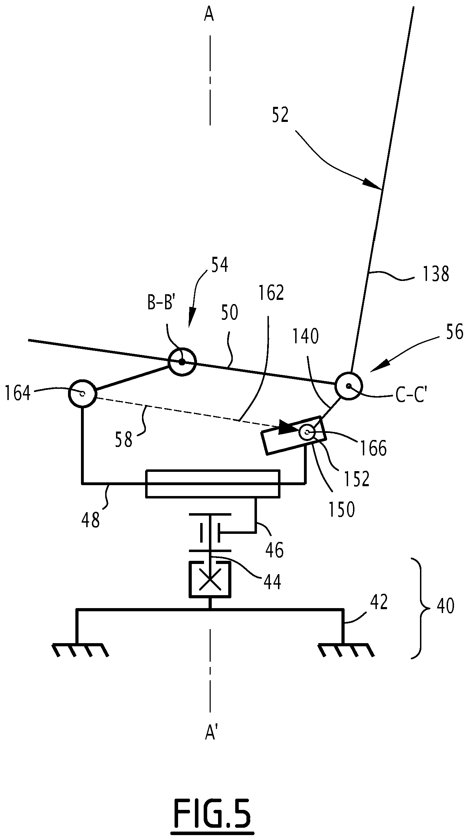

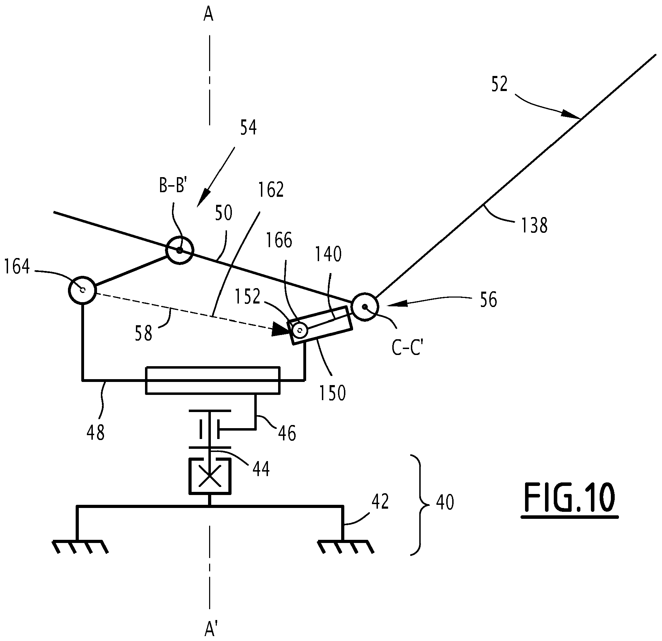

En référence notamment à la figure 5 et à la figure 10, le point arrière d'articulation 166 est situé en-dessous et à l'avant de l'axe arrière d'articulation C-C'. Il est également situé en dessous et à l'arrière de l'axe avant d'articulation B-B'.

Comme visible sur la figure 1, l'ensemble de masquage 62 comporte avantageusement un capot inférieur 170 couvrant vers le haut le bâti de base 42. Dans cet exemple, le capot inférieur 170 présente une forme sensiblement de H en projection sur le plancher 16.

L'ensemble de masquage 62 comporte en outre un capot supérieur 172 de forme effilée vers le bas qui couvre sur les côtés, vers l'avant et vers l'arrière le chariot de déplacement transverse 44, la tourelle 46, le chariot de déplacement principal 48 et le support d'assise 50.

La largeur du capot supérieur 172, prise suivant la direction transverse T, le long de son bord inférieur est par exemple inférieure à 95% de la largeur du capot inférieur 172, prise suivant la direction transverse T, le long de son bord supérieur.

Grâce à la largeur de la structure de support 14 diminuant progressivement en se déplaçant verticalement depuis le support d'assise 50 jusqu'au bâti 42, la forme du capot supérieur 172 est effilée vers le bas. Ceci procure à l'ensemble de masquage 62 un aspect esthétique agréable, notamment en lui fournissant une base effilée, de forme générale avantageusement ovoïde, et non massive.

Cette forme effilée vers le bas du capot supérieur 172 résulte de la configuration particulière de l'agencement du chariot de déplacement transverse 44 directement sur le bâti 42, de l'articulation de la tourelle 46 sur le chariot de déplacement transverse 44, et du montage du chariot de déplacement principal 48 et du support d'assise 50 au-dessus de la tourelle 46.

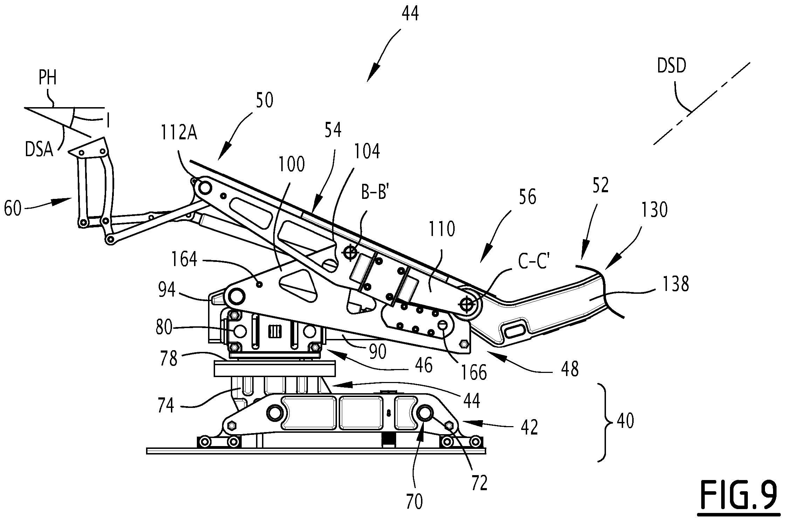

En référence aux figures 4 et 9, le support de repose-pied 60 est ici formé d'un parallélogramme articulé à l'avant du support d'assise 50, actionnable par un vérin (non représenté). Il est déployable entre une position effacée, dans laquelle le repose-pied 30 s'étend sensiblement verticalement en appui à l'avant du capot supérieur 172, et une position active faisant saillie à l'avant du support d'assise 50. Il est articulé avantageusement sur la traverse avant 112A du support d'assise.

Le fonctionnement du siège 12 va maintenant être décrit.

Initialement, le siège 12 est par exemple dans la position redressée représentée sur la figure 1.

Dans cette position, la tige de vérin 162 occupe sa position déployée. Le point arrière d'articulation 166 et le coulisseau 152 sont situés à l'arrière de la coulisse 150, relativement plus proches de l'axe arrière d'articulation C-C'.

La partie supérieure 138 du montant 130 est redressée vers l'avant du fait du maintien du bras inférieur 140 relativement vers le bas et vers l'arrière.

Dans cette position également, comme illustré par la figure 4, l'angle d'inclinaison I du support d'assise 50 par rapport à un plan horizontal PH est minimal. L'axe arrière d'articulation C-C' est relevé vers l'axe avant d'articulation B-B'. La traverse avant 112A est abaissée à une hauteur minimale par rapport à l'axe avant d'articulation B-B'.

L'inclinaison du support d'assise 50 par rapport à un plan horizontal, mesurée par la droite DSA raccordant les points d'intersection de l'axe avant d'articulation B-B' et de l'axe arrière d'articulation C-C' avec un plan perpendiculaire à ces axes est inférieur à 15° et compris notamment entre 0° et 10°.

De même, l'angle obtus formé entre la droite DSA et la droite DSD raccordant le point d'intersection de l'axe arrière d'articulation C-C' et la projection du point arrière d'articulation 166 dans le même plan présente une valeur inférieure à 130 ° et par exemple comprise entre 110 ° et 120 °.

Dans cette position, l'utilisateur peut déplacer le siège 12 suivant la direction transverse, via un déplacement du chariot de déplacement transverse 44 par rapport au bâti 42, par un coulissement du corps 74 sur les barres 72.

De même, l'utilisateur peut piloter la rotation du siège 12 autour de l'axe A-A', en engendrant une rotation de la tourelle 46, du chariot de déplacement principal 48 et du support d'assise 50 autour de l'axe A-A' de rotation de la tourelle 46 par rapport au chariot de déplacement transverse 44.

Également encore, l'utilisateur peut déplacer le chariot de déplacement principal 44 et le support d'assise 50 par rapport à la tourelle 46 par translation suivant la direction principale P en faisant coulisser les tiges de guidage 90 dans les passages principaux 82 de la tourelle 46.

Lorsqu'il souhaite incliner le siège 12, l'utilisateur commande l'actionneur 58 pour passer la tige de vérin 162 de sa position déployée à sa position rétractée. Ce déplacement est guidé par le coulissement du coulisseau 152 dans la coulisse 150, ce qui remonte le point arrière d'articulation 166 et le rapproche de l'axe avant d'articulation B-B'.

Ce déplacement produit alors un déplacement vers le bas de l'axe arrière d'articulation C-C' et un pivotement relatif du support de dossier 52 vers l'arrière et vers le bas par rapport au support d'assise 50.

Le bord arrière du support d'assise, matérialisé par la traverse arrière 112B, se déplace vers le bas et vers l'avant par pivotement du support d'assise 50 autour de l'axe arrière d'articulation C-C'.

Le bord avant du support d'assise, matérialisé par la traverse avant 112A se déplace vers le haut et vers l'arrière en se soulevant par rapport à la traverse arrière 112B.

Ainsi, l'angle obtus formé entre la droite DSA et la droite DSD augmente, par exemple à une valeur supérieure à 130° et notamment comprise entre 140° et 160°.

De même, l'angle d'inclinaison I de la droite DSA par rapport à un plan horizontal PH augmente jusqu'à une valeur supérieure à 15° et notamment comprise entre 20° et 30°.

Lorsque le coulisseau 152 butte contre l'extrémité avant de la coulisse 150, le siège 12 occupe sa position inclinée.

L'utilisateur peut alors déployer le support de repose-pied 60, pour placer le repose-pied 30 en saillie à l'avant de l'assise 22.

Grâce à la disposition du point arrière d'articulation 166 à l'arrière de l'axe avant d'articulation B-B', sur toute la course de l'organe déployable 162 formé par la tige de vérin entre la position rétractée et la position déployée, il est possible d'obtenir une inclinaison significative du support de dossier 52 par rapport au support de siège 50 dans la position inclinée, par un mécanisme très simple qui utilise un nombre minimal de pièces et de liaisons.

La disposition précitée du point arrière d'articulation 166, et la configuration du chariot de déplacement principal 48, et des systèmes d'articulation 54, 56 du support d'assise 50 et du support de dossier 52 augmentent ainsi significativement la fiabilité de manoeuvre du siège 12 entre sa position redressée et sa position inclinée, et diminuent la masse globale du siège.

Dans une variante, la coulisse 150 est délimitée dans le bras inférieur 140, et le coulisseau 152 est monté sur le flasque 100.

Dans une variante de chacun des modes de réalisation précédents, un pivot 120 est formé dans chaque poutre principale 110, et un orifice 122 pour le pivot 120 est prévu dans le flasque latéral 100.

De même, dans une variante de chacun des modes de réalisation précédents, un pivot 142 est prévu sur chaque montant 130, et un orifice 144 correspondant est prévu dans la poutre 110 correspondante.

## Revendications

1. Structure de siège (14) d'aéronef comprenant :
- un bâti (42), destiné à être fixé sur un plancher (16) d'une cabine (10) de l'aéronef ;
- une tourelle (46) disposée au-dessus du bâti (42), la tourelle (46) étant montée rotative par rapport au bâti (42) autour d'un axe vertical (A-A') entre une configuration nominale de repos dans laquelle la structure de siège (14) est orientée suivant une direction principale (P) et au moins une configuration pivotée autour de l'axe vertical (A-A') par rapport à la configuration nominale;
- un chariot de déplacement principal (48), déplaçable suivant la direction principale (P) par rapport au bâti (42),
- un support d'assise (50) ;
**caractérisée en ce que** le chariot de déplacement principal (48) est porté par la tourelle (46), en étant monté mobile en translation par rapport à la tourelle (46) suivant la direction principale (P) dans la configuration nominale, le chariot de déplacement principal (48) portant le support d'assise (50).

2. Structure de siège (14) selon la revendication 1, dans laquelle le chariot de déplacement principal (48) s'étend au moins en partie au-dessus de la tourelle (46).

3. Structure de siège (14) d'aéronef selon la revendication 1 ou 2, dans laquelle le chariot de déplacement principal (48) est monté mobile en translation dans la tourelle (46).

4. Structure de siège (14) selon la revendication 3, dans laquelle l'un du chariot de déplacement principal (48) et de la tourelle (46) comprend au moins une tige de guidage (90), l'autre du chariot de déplacement principal (48) et de la tourelle (46) délimitant un passage principal (82) de réception de la tige de guidage (90) s'étendant suivant la direction principale (P), la au moins une tige de guidage (90) étant montée mobile en translation dans le passage principal (82).

5. Structure de siège (14) selon la revendication 4, dans laquelle l'un du chariot de déplacement principal (48) et de la tourelle (46) comprend deux tiges de guidage (90) parallèles, l'autre du chariot de déplacement principal (48) et de la tourelle (46) comportant pour chaque tige de guidage (90), un passage principal (82) de réception d'une tige de guidage (90) respective.

6. Structure de siège (14) selon l'une quelconque des revendications précédentes, dans laquelle la largeur de la tourelle (46), prise perpendiculairement la direction principale (P) dans la configuration nominale, est inférieure à la largeur du chariot de déplacement principal (48), prise perpendiculairement la direction principale (P) dans la configuration nominale.

7. Structure de siège (14) selon l'une quelconque des revendications précédentes, comprenant un chariot de déplacement transverse (44), monté mobile suivant une direction transverse (T) perpendiculaire à la direction principale (P) dans la configuration nominale, la tourelle (46) étant montée rotative au-dessus du chariot de déplacement transverse (44).

8. Structure de siège (14) selon la revendication 7, dans laquelle la tourelle (46) est montée rotative dans le chariot de déplacement transverse (44).

9. Structure de siège (14) selon l'une quelconque des revendications 7 ou 8, dans laquelle l'un du bâti (42) et du chariot de déplacement transverse (44) comprend au moins une barre transverse (72), l'autre du bâti (42) et du chariot de déplacement transverse (44) comprenant un passage transverse (76) de guidage de la barre transverse (72) dans laquelle la barre transverse (72) est reçue mobile en translation dans le passage transverse (76) le long de la direction transverse (T).

10. Structure de siège (14) selon la revendication 9, dans laquelle l'un du bâti (42) et du chariot de déplacement transverse (44) comprend deux barres transverses (72) parallèles, l'autre du bâti (42) et du chariot de déplacement transverse (44) comprenant, pour chaque barre transverse (72), un passage transverse (76) de guidage de la barre transverse (72) dans laquelle la barre transverse (72) est reçue mobile en translation le long de la direction transverse (T).

11. Structure de siège (14) selon la revendication 9 ou 10, dans laquelle le bâti (42) comprend des patins (70) montés parallèlement l'un à l'autre suivant la direction principale (P) dans la configuration nominale et destinés à être fixés dans le plancher (16) de la cabine (10), la ou chaque barre transverse (72) s'étendant entre les patins (70).

12. Structure de siège (14) selon l'une quelconque des revendications 7 à 11, dans laquelle la largeur du chariot de déplacement transverse (44), prise suivant la direction transverse (T) est inférieure à la largeur de la tourelle (46), prise suivant la direction transverse (T).

13. Structure de siège (14) selon l'une quelconque des revendications précédentes, comportant un capot (172) couvrant le bâti (42), la tourelle (46), et le chariot de déplacement principal (48), le capot (172) présentant une forme convergente de haut en bas.

14. Structure de siège (14) selon l'une quelconque des revendications précédentes, dans laquelle le support d'assise (50) est articulé sur le chariot de déplacement principal (48), la structure de siège (14) comprenant un support de dossier (52) articulé sur le support d'assise (50).

15. Cabine (10) d'aéronef, comprenant un plancher (16), et un siège d'aéronef (12), comprenant une structure de siège (14) selon l'une quelconque des revendications précédentes, montée sur le plancher (16).

## Revendications modifiées

### Revendications modifiées conformément à la règle 137(2) CBE.

1. Structure de siège (14) d'aéronef comprenant :
- un bâti (42), destiné à être fixé sur un plancher (16) d'une cabine (10) de l'aéronef ;
- une tourelle (46) disposée au-dessus du bâti (42), la tourelle (46) étant montée rotative par rapport au bâti (42) autour d'un axe vertical (A-A') entre une configuration nominale de repos dans laquelle la structure de siège (14) est orientée suivant une direction principale (P) et au moins une configuration pivotée autour de l'axe vertical (A-A') par rapport à la configuration nominale;
- un chariot de déplacement principal (48), déplaçable suivant la direction principale (P) par rapport au bâti (42),
- un support d'assise (50) ;
le chariot de déplacement principal (48) étant porté par la tourelle (46), en étant monté mobile en translation par rapport à la tourelle (46) suivant la direction principale (P) dans la configuration nominale, le chariot de déplacement principal (48) portant le support d'assise (50), **caractérisée en ce que** la structure de siège (14) comprend un chariot de déplacement transverse (44), monté mobile suivant une direction transverse (T) perpendiculaire à la direction principale (P) dans la configuration nominale, la tourelle (46) étant montée rotative au-dessus du chariot de déplacement transverse (44).

2. Structure de siège (14) selon la revendication 1, dans laquelle le chariot de déplacement principal (48) s'étend au moins en partie au-dessus de la tourelle (46).

3. Structure de siège (14) d'aéronef selon la revendication 1 ou 2, dans laquelle le chariot de déplacement principal (48) est monté mobile en translation dans la tourelle (46).

4. Structure de siège (14) selon la revendication 3, dans laquelle l'un du chariot de déplacement principal (48) et de la tourelle (46) comprend au moins une tige de guidage (90), l'autre du chariot de déplacement principal (48) et de la tourelle (46) délimitant un passage principal (82) de réception de la tige de guidage (90) s'étendant suivant la direction principale (P), la au moins une tige de guidage (90) étant montée mobile en translation dans le passage principal (82).

5. Structure de siège (14) selon la revendication 4, dans laquelle l'un du chariot de déplacement principal (48) et de la tourelle (46) comprend deux tiges de guidage (90) parallèles, l'autre du chariot de déplacement principal (48) et de la tourelle (46) comportant pour chaque tige de guidage (90), un passage principal (82) de réception d'une tige de guidage (90) respective.

6. Structure de siège (14) selon l'une quelconque des revendications précédentes, dans laquelle la largeur de la tourelle (46), prise perpendiculairement la direction principale (P) dans la configuration nominale, est inférieure à la largeur du chariot de déplacement principal (48), prise perpendiculairement la direction principale (P) dans la configuration nominale.

7. Structure de siège (14) selon l'une quelconque des revendications précédentes, dans laquelle la tourelle (46) est montée rotative dans le chariot de déplacement transverse (44).

8. Structure de siège (14) selon l'une quelconque des revendications précédentes, dans laquelle l'un du bâti (42) et du chariot de déplacement transverse (44) comprend au moins une barre transverse (72), l'autre du bâti (42) et du chariot de déplacement transverse (44) comprenant un passage transverse (76) de guidage de la barre transverse (72) dans laquelle la barre transverse (72) est reçue mobile en translation dans le passage transverse (76) le long de la direction transverse (T).

9. Structure de siège (14) selon la revendication 8, dans laquelle l'un du bâti (42) et du chariot de déplacement transverse (44) comprend deux barres transverses (72) parallèles, l'autre du bâti (42) et du chariot de déplacement transverse (44) comprenant, pour chaque barre transverse (72), un passage transverse (76) de guidage de la barre transverse (72) dans laquelle la barre transverse (72) est reçue mobile en translation le long de la direction transverse (T).

10. Structure de siège (14) selon la revendication 8 ou 9, dans laquelle le bâti (42) comprend des patins (70) montés parallèlement l'un à l'autre suivant la direction principale (P) dans la configuration nominale et destinés à être fixés dans le plancher (16) de la cabine (10), la ou chaque barre transverse (72) s'étendant entre les patins (70).

11. Structure de siège (14) selon l'une quelconque des revendications précédentes, dans laquelle la largeur du chariot de déplacement transverse (44), prise suivant la direction transverse (T) est inférieure à la largeur de la tourelle (46), prise suivant la direction transverse (T).

12. Structure de siège (14) selon l'une quelconque des revendications précédentes, comportant un capot (172) couvrant le bâti (42), la tourelle (46), et le chariot de déplacement principal (48), le capot (172) présentant une forme convergente de haut en bas.

13. Structure de siège (14) selon l'une quelconque des revendications précédentes, dans laquelle le support d'assise (50) est articulé sur le chariot de déplacement principal (48), la structure de siège (14) comprenant un support de dossier (52) articulé sur le support d'assise (50).

14. Cabine (10) d'aéronef, comprenant un plancher (16), et un siège d'aéronef (12) comprenant une structure de siège (14) selon l'une quelconque des revendications précédentes, montée sur le plancher (16).
